# EUROPÄISCHE PATENTSCHRIFT

(11) **EP 2 022 708 B1**
(45) Veröffentlichungstag und Bekanntmachung des Hinweises auf die Patenterteilung: **11.09.2013**
(21) Anmeldenummer: 08012433.2
(22) Anmeldetag: 10.07.2008
(51) Int. Cl.: B62D 33/06, B60P 3/32, B60P 3/38

(54) **Schlafliegen-Rahmen für Schlafliegen von Fahrerhäusern von Nutzfahrzeugen**
Bed frame for a bed of a utility vehicle driver cab
Cadre de couchette pour couchette de cabines de véhicules utilitaires

(30) Priorität: 08.08.2007 DE 102007037456
(43) Veröffentlichungstag der Anmeldung: 11.02.2009
(73) Patentinhaber: MAN Truck & Bus AG, 80995 München (DE)
(72) Erfinder: Mederle, Günther, Dipl.-Ing., 85051 Ingolstadt (DE); Hauer, Thomas, 85244 Röhrmoos (DE)

(56) Entgegenhaltungen:
- EP-A- 0 036 758
- EP-A- 0 939 023
- WO-A-2006/131634
- DE-A1-102004 001 431
- DE-B3-102004 045 185
- US-A- 3 524 673

## Beschreibung

Die Erfindung betrifft einen Schlafliegen-Rahmen von Fahrerhäusern von Nutzfahrzeugen, insbesondere von Lastkraftwagen, entsprechend den Merkmalen des Anspruchs 1.

In Fernverkehr-Fahrerhäusern können bis zu zwei Schlafliegen eingebaut werden. Diese Schlafliegen werden in der Regel hinter den Sitzen übereinander angeordnet. Sowohl die untere als auch die obere Schlafliege können hochklappbar ausgeführt sein. Die Schlafliegen bestehen im Regelfall aus einem Tragrahmen bzw. Bettrahmen mit einem Lattenrost als Unterfederung sowie einer auf dem Lattenrost aufliegenden Matratze. Für unterschiedliche Modelle von Fahrzeugen werden regelmäßig auch unterschiedliche Arten bzw. Größen von Schlafliegen benötigt, wobei zudem, im Gegensatz zu herkömmlichen Betten, eine größere Funktionalität bzw. sichere Fixierung der Schlafliege im Fahrerhaus erforderlich ist, was eine Vielzahl weiterer Bauteile bzw. Funktionselemente erforderlich macht, um eine qualitativ hochwertige Schiafliege zur Verfügung zu stellen.

Für unterschiedliche Fahrerhäuser von Nutzfahrzeugen sind somit regelmäßig eine Vielzahl von unterschiedlichen Schlafliegen vorzuhalten.

Aus der DE 10 2004 045 185 B3 ist bereits eine verstellbare Schlafliege für Nutzfahrzeuge bekannt, bei der zwei Segmente einer Liege in unterschiedliche Postionen verstellt bzw. verfahren werden können. Gemäß der dortigen Fig. 5 kann der Schlafliegen-Rahmen mehrteilig ausgebildet sein. Konkret umfasst der Rahmen hier vier Profilleisten, die über Verbindungsstücke als separate Bauteile an ihren Ecken miteinander verbunden sind. In eine Nut eines dem Fahrzeuginnenraum zugewandten Rahmenlängsteils kann ein Funktionselement lösbar eingehängt werden, zum Beispiel ein Cupholder, ein Ablagetisch, eine Leselampe oder eine Absturzsicherung.

Aus der EP 0 939 023 A2 ist ebenfalls eine Schlafliege in einem Fahrerhaus eines Nutzfahrzeuges bekannt, mittels der der Liegekomfort erhöht und ein Klappergeräusch der Schlafliege im Fahrzeugbetrieb unterbunden werden soll. Hierzu ist vorgesehen, dass die Schlafliege jeweils im Bereich ihrer stirnseitig angeordneten Lagerungen schwingungsmäßig vom Fahrerhaus entkoppelt ist. Für diese schwingungsmäßige Entkopplung werden konkret an den entsprechenden Lagerstellen gummielastische Feder-/Dämpfungselemente vorgesehen. Ein mehrteiliger Rahmenaufbau ist hier nicht vorgesehen.

Die EP 0 036 758 A1 betrifft ebenfalls eine Schlafliegenanordnung für Fahrerkabinen, bei dem in Verbindung mit einer geeigneten Klappung von Innensitzen ein Bett in seine Liegestellung überführt werden kann. Im aufgeklappten, verstauten Zustand ist das Bett hinter einer Sitzanordnung verstaut. Die US 3,524,673 betrifft eine Bettanordnung in einer Fahrerkabine, welche Bettanordnung teleskopierbare und faltbare Bauteile aufweist, um ein Bett von seiner Verstaustellung in seine Funktionsstellung zu überführen.

Weiter ist eine klappbare Liege für eine Fahrgastzelle eines Kraftfahrzeugs auch aus der DE 10 2004 001 431 A1 bekannt.

Auch aus der WO 2006/131634 A2 ist ein Bettrahmen bekannt, der teleskopierbare Seitenschienen aufweist und zudem schwenkbar im Innenraum eines Fahrzeugs gelagert und angeordnet ist.

Demgegenüber ist es Aufgabe der vorliegenden Erfindung, einen Schlafliegen-Rahmen für Schlafliegen von Fahrerhäusern von Nutzfahrzeugen, insbesondere von Lastkraftwagen, zur Verfügung zu stellen, der auf baulich und fertigungstechnisch einfache Weise herstellbar ist und der auf einfache Weise an unterschiedliche Fahrerhausgegebenheiten von Nutzfahrzeugen anpassbar ist.

Diese Aufgabe wird gelöst mit den Merkmalen des Anspruchs 1. Vorteilhafte Ausgestaltungen der Erfindung sind Gegenstand der Unteransprüche.

Gemäß Anspruch 1 ist ein Schlafliegen-Rahmen für Schlafliegen von Fahrerhäusern von Nutzfahrzeugen vorgesehen, der mehrteilig aus einzelnen miteinander verbindbaren Rahmenteilen aufgebaut ist, wobei der Rahmen eine Rechteckform aufweist mit zwei Rahmenlängsteilen sowie daran anschließenden Rahmenseitenteilen als Stirnseitenteilen. Erfindungsgemäß sind in die Rahmenseitenteile Funktionselemente integriert, wobei die die Funktionselemente aufweisenden Rahmenseitenteile im Gussverfahren hergestellte Gussbauteile sind, während die keine integral damit ausgebildeten Funktionselemente aufweisenden Rahmenlängsteile durch Strangpressprofile gebildet sind.

Der Ausbildung von Rahmenteilen durch Strangpressprofile bzw. durch Gussbauteile liegt die allgemeine Idee zugrunde, dass diejenigen Rahmenteile, die keine integral damit ausbildbaren Funktionselemente aufweisen, in einfacher und preiswerter Weise durch Strangpressen hergestellt werden sollen, während die die Funktionselemente integral aufweisenden Rahmenteile dagegen im demgegenüber etwas aufwändigeren Gussverfahren hergestellt werden sollen, da mittels eines derartigen Gießverfahrens die Funktionsintegration auf einfache und preiswerte Weise möglich ist.

Weiter ist erfindungsgemäß vorgesehen, dass die Rahmenseitenteile mit den Rahmenlängsteilen mittels einer Steckverbindung verbindbar sind. Mit einer derartigen Steckverbindung lässt sich auf einfache Weise eine funktionssichere Verbindung der unterschiedlichen Rahmenteile herstellen, wobei die Steckverbindung durch einen am Rahmenseitenteil angeformten Steckzapfen ausgebildet, der formschlüssig in eine rahmenlängsteilseitige Steckzapfenaufnahme als weiteren Bestandteil der Steckverbindung eingesteckt werden kann. Zur sicheren Fixierung dieser Steckverbindung kann ferner vorgesehen sein, dass diese mittels einer zusätzlichen Sicherheitseinrichtung, insbesondere mittels einer Sicherungsschraube und/oder mittels eines Sicherungssplintes, fixiert ist. Die Fixierung kann hier z. B. konkret durch eine quer zur Steckrichtung durch den Steckzapfen und die Steckzapfenaufnahme gesteckte Sicherungsschraube oder Sicherungssplint gebildet sein.

Die Mehrteiligkeit erlaubt ferner eine flexible und wenig bauteilintensive Anpassung eines Rahmens an unterschiedliche Fahrerhausgegebenheiten. So können insbesondere in Verbindung mit der vorgesehenen Integration von Funktionselementen in die Rahmenseitenteile vorteilhaft standardisierte Rahmenteile zur Verfügung gestellt werden, z. B. in Form von Haltern und/oder Aufsteckelementen und/oder Anbindungspunkten und/oder Lagerelementen oder dergleichen, wie sie für nahezu alle Schlafliegenausbildungen erforderlich sind. Dadurch können bestimmte Rahmenteile, insbesondere Rahmenseitenteile eines eine Rechteckform aufweisenden Rahmens, die an Rahmenlängsteile anschließen, zur Verfügung gestellt werden, die in einer Vielzahl von unterschiedlichen Fahrerhäusern verwendet werden können, so dass z. B. zur Längenanpassung lediglich die anderen Rahmenteile, insbesondere die Rahmenlängsteile in unterschiedlicher Größe vorgehalten werden müssen. Grundsätzlich können jedoch auch Funktionselemente aufweisende Rahmenseitenteile unterschiedlicher Art vorgehalten werden, in denen z. B. unterschiedliche der zuvor genannten Funktionselemente integriert sind, um ein Set von beliebig miteinander kombinierbaren Rahmenteilen auszubilden, so dass eine einfache und individuelle Anpassung an die jeweiligen Fahrerhausgegebenheiten auf einfache Weise möglich ist.

Gemäß einer besonders bevorzugten Ausgestaltung der Erfindung sind die keine Funktionselemente aufweisenden Rahmenlängsteile durch herstellungstechnisch einfache und preiswerte Leichtmetall-Strangpressprofile gebildet. Grundsätzlich bestünde aber auch die Möglichkeit, anstelle von Leichtmetall ein Kunststoffmaterial vorzusehen.

Gemäß einer weiteren besonders bevorzugten Ausgestaltung der vorliegenden Erfindung ist ferner vorgesehen, dass die die Funktionselemente aufweisenden Rahmenseitenteile als Druckgussbauteile ausgebildet sind. Bevorzugtes Material ist hier ebenfalls wiederum ein Leichtmetall. Grundsätzlich ist auch die Verwendung von Kunststoff möglich.

Weiter ist erfindungsgemäß zur Ausbildung der Schlafliege vorgesehen, den Rahmen form- und/oder kraftschlüssig mit einem Lattenrost zu verbinden. Auf dem Lattenrost kann wiederum eine Matratze aufgelegt sein. Diese Matratze kann dann wieder form- und/oder kraftschlüssig mit dem Rahmen und/oder dem Lattenrost verbunden sein.

Die Erfindung wird nachfolgend anhand einer Zeichnung näher erläutert.

Es zeigen:
- Fig. 1: schematisch eine perspektivische Draufsicht auf eine Schlafliege mit erfindungsgemäßem Rahmen,
- Fig. 2: schematisch eine auseinandergezogene, perspektivische Darstellung des erfindungsgemäßen Rahmens, und
- Fig. 3: eine vergrößerte Detailansicht des Funktionselemente aufweisenden Rahmenseitenteils.

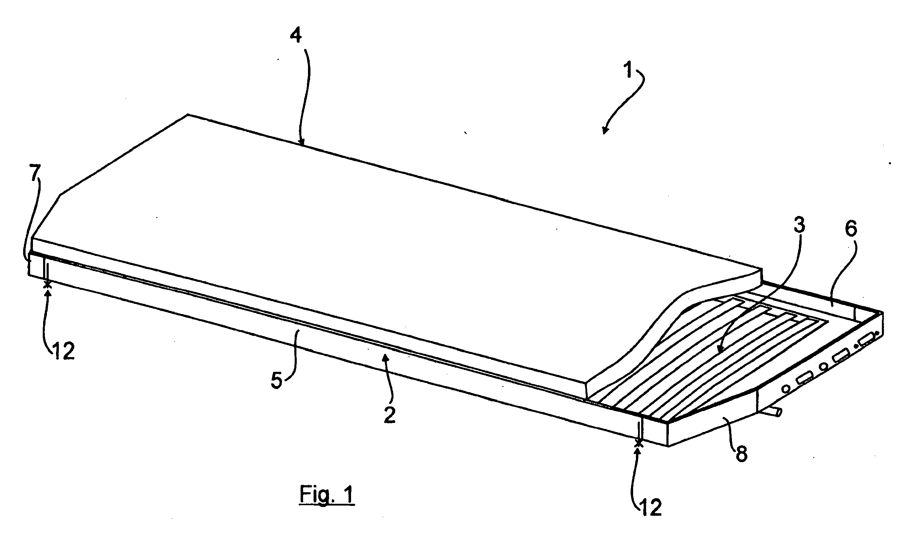

In der Fig. 1 ist schematisch und perspektivisch eine Schlafliege 1 gezeigt, die einen Rahmen 2 aufweist, in den ein Lattenrost 3 eingesetzt ist. Ferner ist im Rahmen 2 eine Matratze 4 eingesetzt. Sämtliche Bauteile sind bevorzugt miteinander form- und/oder kraftschlüssig verbunden.

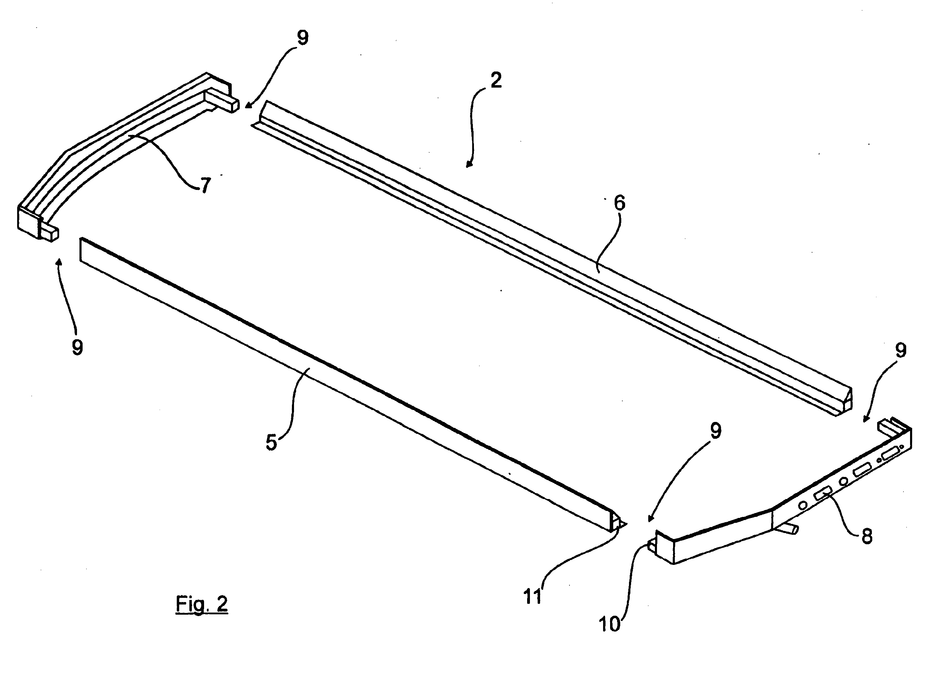

Wie dies insbesondere der Fig. 2 entnommen werden kann, besteht der erfindungsgemäße Rahmen 2 mehrteilig aus einzelnen miteinander verbindbaren Rahmenteilen, nämlich zwei zur Ausbildung einer Rechteckform des Rahmens 2 parallel zueinander verlaufenden und voneinander einen vorgegebenen Abstand aufweisenden Rahmenlängsteilen 5, 6 sowie aus zwei an die Rahmenlängsteile 5, 6 anschließenden Rahmenseitenteilen 7, 8, die im vorliegenden Beispielfall die Stirnseitenteile ausbilden.

Die beiden Rahmenlängsteile 5, 6 weisen eine gleiche Länge auf und sind im Spritzgussverfahren hergestellte Profilteile, vorzugsweise aus Leichtmetall.

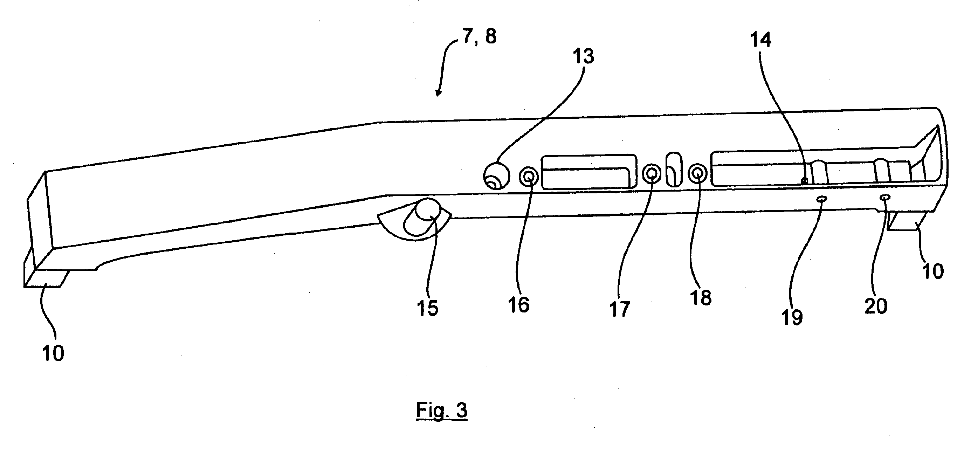

Die beiden Rahmenseitenteile 7, 8 sind dagegen, wie dies insbesondere aus der Fig. 3 hervorgeht, als Druckgussteile ausgebildet, die eine Reihe von nachfolgend noch näher beschriebenen Funktionselementen in integraler Weise aufweisen. Die Rahmenseitenteile 7, 8 sind jeweils mittels zweier Steckverbindungen 9 mit den Rahmenlängsteilen 5, 6 verbunden. Konkret ist hierzu an den Rahmenseitenteilen 7, 8 jeweils endseitig ein Steckzapfen 10 angeformt, der im in der Fig. 1 dargestellten montierten Zustand formschlüssig in eine Steckzapfenaufnahme 11 eingreift, die an den beiden Endbereichen der Rahmenlängsteile 5, 6 ausgebildet ist.

Zur Fixierung der Steckverbindung 9 kann zudem vorgesehen sein, diese mittels einer zusätzlichen Schraubverbindung zu sichern. Eine derartige Schraubverbindung 12 ist schematisch in der Fig. 1 eingezeichnet.

Wie dies insbesondere der Fig. 3 entnommen werden kann, sind an den Rahmenseitenteilen 7, 8, die bevorzugt als Gleichteile ausgebildet sind, Funktionselemente integral im Druckgussverfahren mitangeformt, hier beispielsweise Durchgangslöcher bzw. Anschraubpositionen 13, 14 für den Lattenrost 3, ein Lagerbolzen 15 für eine vordere Liegenlagerung, Anbindungspunkte 16, 17, 18 für Gasfedern sowie Anschraubpunkte 19, 20 der Schlafliege an einem hinteren Liegenlager.

## Patentansprüche

1. Schlafliegen-Rahmen für Schlafliegen von Fahrerhäusern von Nutzfahrzeugen, insbesondere Lastkraftwagen, wobei der Rahmen (2) mehrteilig aus einzelnen miteinander verbindbaren Rahmenteilen (5, 6, 7, 8) aufgebaut ist, wobei der Rahmen (2) eine Rechteckform aufweist mit zwei Rahmenlängsteilen (5, 6) sowie daran anschließenden Rahmenseitenteilen (7, 8) als Stirnseitenteile, wobei die Rahmenseitenteile (7, 8) mit den Rahmenlängsteilen (5, 6) mittels einer Steckverbindung (9) verbindbar sind, und wobei in die Rahmenseitenteiie (7, 8) Funktionselemente (10, 13 bis 20) integriert sind, und die die Funktionselemente (10, 13 bis 20) aufweisenden Rahmenseitenteile (7, 8) im Gussverfahren hergestellte Gussbauteile sind,
und wobei die Rahmenlängsteile (5, 6) durch Strangpressprofile gebildet sind,
und wobei die Steckverbindung (9) jeweils einen am Rahmenseitenteil (7,8) angeformten Steckzapfen (10) aufweist, der im montierten Zustand formschlüssig in eine rahmenlängsteilseitige Steckzapfenaufnahme (11) eingesteckt ist,
und wobei der Rahmen (2) zur Ausbildung einer Schlafliege (1) form- und/oder kraftschlüssig mit einem Lattenrost (3) verbunden ist.

2. Rahmen nach Anspruch 1, **dadurch gekennzeichnet, dass** als Funktionselemente (13 bis 20) Halter- und/oder Aufsteckelemente und/oder Anbindungspunkte, und/oder Lagerelemente, und/oder Schraublöcher (13, 14) zur Lattenrostfixierung und/oder Lagerbolzen (15) für eine Liegenlagerung und/oder Anbindungselemente (16, 17, 18) für Gasfedern und/oder Anschraubpunkte (19, 20) für eine Liegenlagerung, vorgesehen sind.

3. Rahmen nach Anspruch 1 oder Anspruch 2, **dadurch gekennzeichnet, dass** die Steckverbindung (9) mittels wenigstens einer Sicherheitseinrichtung (12), insbesondere mittels einer Sicherungsschraube und/oder mittels eines Sicherungssplintes, fixierbar ist.

4. Rahmen nach Anspruch 1, **dadurch gekennzeichnet, dass** auf den Lattenrost (3) wiederum eine Matratze (4) aufgelegt ist, die vorzugsweise form- und/oder kraftschlüssig mit dem Rahmen (2) und/oder dem Lattenrost (3) verbunden ist.

## Claims

1. A bed frame for beds of driver cabs of utility vehicles, in particular lorries, wherein the frame (2) is constructed in multi-part form from individual interconnectable frame parts (5, 6, 7, 8), wherein the frame (2) has a rectangular shape with two frame longitudinal parts (5, 6) and frame side parts (7, 8) which adjoin the latter as end side parts, wherein the frame side parts (7, 8) are connectable to the frame longitudinal parts (5, 6) by means of a plug-in connection (9), and wherein functional elements (10, 13 to 20) are integrated into the frame side parts (7, 8), and the frame side parts (7, 8) having the functional elements (10, 13 to 20) are cast components produced by casting, and wherein the frame longitudinal parts (5, 6) are formed by extruded profiles, and wherein the plug-in connection (9) in each case has a plug-in pin (10) which is integrally formed on the frame side part (7, 8) and, in the fitted state, is inserted in a form-fitting manner into a plug-in-pin receptacle (11) on the frame longitudinal part side, and wherein, in order to form a bed (1), the frame (2) is connected in a form-fitting and/or frictional manner to a slatted base (3).

2. The frame according to Claim 1, **characterized in that** the functional elements (13 to 20) provided are holder elements and/or push-on elements and/or connecting points, and/or bearing elements, and/or screw holes (13, 14) for fixing the slatted base, and/or bearing bolts (15) for supporting the bed, and/or connecting elements (16, 17, 18) for gas-filled springs, and/or screw-on points (19, 20) for supporting the bed.

3. The frame according to Claim 1 or Claim 2, **characterized in that** the plug-in connection (9) is fixable by means of at least one safety device (12), in particular by means of a securing screw and/or by means of a split securing pin.

4. The frame according to Claim 1, **characterized in that** a mattress (4) is in turn placed onto the slatted base (3), the mattress preferably being connected in a form-fitting and/or frictional manner to the frame (2) and/or to the slatted base (3).

## Revendications

1. Cadre de couchette pour couchettes de cabines de véhicules utilitaires, en particulier de poids lourds, le cadre (2) étant conçu en plusieurs parties à partir de parties individuelles de cadre (5, 6, 7, 8) pouvant être reliées les unes aux autres, le cadre (2) présentant une forme rectangulaire avec deux parties longitudinales de cadre (5, 6) ainsi que des parties latérales de cadre (7, 8) s'y raccordant, en tant que parties latérales frontales, les parties latérales de cadre (7, 8) pouvant être reliées aux parties longitudinales de cadre (5, 6) au moyen d'une liaison enfichable (9), et des éléments fonctionnels (10, 13 à 20) étant intégrés dans les parties latérales de cadre (7, 8), et les parties latérales de cadre (7, 8) comprenant les éléments fonctionnels (10, 13 à 20) étant des pièces moulées fabriquées grâce à un procédé de moulage,
et les parties longitudinales de cadre (5, 6) étant formées par des profilés extrudés,
et la liaison enfichable (9) comprenant respectivement un tenon enfichable (10) formé sur la partie latérale de cadre (7, 8), lequel tenon enfichable, à l'état monté, est enfiché avec coopération de formes dans un logement de tenon enfichable (11) situé du côté de la partie longitudinale de cadre,
et le cadre (2) étant relié par coopération de formes et/ou par force à un sommier à lattes (3) pour former une couchette (1).

2. Cadre selon la revendication 1, **caractérisé en ce que** des éléments de retenue et/ou d'enfichage et/ou des points de connexion, et/ou des éléments de palier, et/ou des trous de vis (13, 14) pour la fixation du sommier à lattes et/ou des boulons de palier (15) pour un support de couchette et/ou des éléments de connexion (16, 17, 18) pour des ressorts à gaz et/ou des points de vissage (19, 20) pour un support de couchette sont prévus en tant qu'éléments fonctionnels (13 à 20).

3. Cadre selon la revendication 1 ou la revendication 2, **caractérisé en ce que** la liaison enfichable (9) peut être fixée au moyen d'au moins un dispositif de sûreté (12), en particulier au moyen d'une vis de sûreté et/ou au moyen d'un socle de sûreté.

4. Cadre selon la revendication 1, **caractérisé en ce qu'**un matelas (4) est pour sa part placé sur le sommier à lattes (3), lequel matelas est de préférence relié par coopération de formes et/ou par force au cadre (2) et/ou au sommier à lattes (3).
